Europäisches Patentamt

(19) European Patent Office

Office européen des brevets

(11) EP 0 764 671 A1

## (12) EUROPEAN PATENT APPLICATION
published in accordance with Art. 158(3) EPC

(43) Date of publication:
26.03.1997 Bulletin 1997/13

(21) Application number: 95915313.1

(22) Date of filing: 13.04.1995

(51) Int. Cl.$^6$: **C08G 63/06**, C08G 63/84, C08G 63/87, C08L 67/04, C08K 3/34

(86) International application number:
PCT/JP95/00721

(87) International publication number:
WO 95/28432 (26.10.1995 Gazette 1995/46)

(84) Designated Contracting States:
AT BE CH DE DK ES FR GB GR IE IT LI LU MC NL PT SE

(30) Priority: 15.04.1994 JP 76905/94

(71) Applicant: KYOWA HAKKO KOGYO CO., LTD.
Chiyoda-ku, Tokyo 100 (JP)

(72) Inventors:
• YANAGISAWA, Norio
Yokkaichi-shi, Mie 510 (JP)

• MURAYAMA, Toshikazu
Yokkaichi-shi, Mie 510 (JP)
• YOKOMORI, Yorozu
Yokkaichi-shi, Mie 510 (JP)
• KIMURA, Yoshiharu
Ohmihachiman-shi, Shiga 523 (JP)

(74) Representative: VOSSIUS & PARTNER
Siebertstrasse 4
81675 München (DE)

(54) **PROCESS FOR PRODUCING POLY(HYDROXY CARBOXYLIC ACID)**

(57) The present invention relates to a process for producing polyhydroxycarboxylic acids, specifically, those having a weight-average molecular weight of 50,000 or above.

Said polyhydroxycarboxylic acids are useful as biodegradable plastics for food-wrapping films, beverage bottles, drug delivery systems, etc.

## Description

### Technical Field

The present invention relates to a process for producing polyhydroxycarboxylic acids, specifically, those having a weight-average molecular weight of 50,000 or above. Said polyhydroxycarboxylic acids are useful as biodegradable plastics for food-wrapping films, beverage bottles, drug delivery systems, etc.

### Background Art

The following two methods are known as methods for producing polyhydroxycarboxylic acids by polymerizing hydroxycarboxylic acids such as lactic acid and glycolic acid: ring-opening polymerization of cyclic dimers of hydroxycarboxylic acids such as lactide and glycolide, and direct dehydration condensation of hydroxycarboxylic acids.

As an example of a process which involves ring-opening polymerization of cyclic dimers of hydroxycarboxylic acids, Japanese Published Examined Patent Application No. 14688/81 discloses a process for producing copolymers of lactic acid and glycolic acid having an average molecular weight of 72,000 by copolymerizing, in the presence of stannous octanoate, a mixture of lactide and glycolide respectively obtained by dehydration condensation of lactic acid and glycolic acid.

Japanese Published Unexamined Patent Application No. 69553/90 discloses polylactic acids and polyglycolic acids having molecular weights of 10,000-800,000, and also discloses, as an example of polylactic acid synthesis, a process for producing polylactic acids of molecular weight of 100,000 by subjecting DL-lactide to ring-opening polymerization in the presence of stannous octanoate catalyst.

A polyhydroxycarboxylic acid of high molecular weight can be obtained by these processes that involve ring-opening polymerization of cyclic dimers of hydroxycarboxylic acids. However, such processes have various problems for industrial utilization; that is, they are complicated with many steps, the yield of polymers produced is low, and the cost rises as a result.

On the other hand, processes by direct dehydration condensation of hydroxycarboxylic acids are industrially advantageous with fewer steps, high yield and low cost. However, these processes are not applicable to the production of polyhydroxycarboxylic acids of high molecular weight. As an example of an improved process of this direct dehydration condensation, Japanese Published Unexamined Patent Application No. 28521/86 discloses a process for producing polymers or copolymers of lactic acid and glycolic acid having a weight-average molecular weight of more than 5,000, usually 5,000-30,000, by subjecting lactic acid and/or glycolic acid to polycondensation reaction in the presence or absence of an inorganic solid acid catalyst.

In this process, aluminum silicate is used as one of the inorganic solid acid catalysts. Aluminum silicate is a complex consisting of aluminum oxide and silicon dioxide, and has various kinds of compositions. However, there is no reference to the composition ratio of the aluminum silicate used in said process.

The weight-average molecular weight of the polymers or the copolymers produced by said process is around 30,000. Even polymers or copolymers of weight-average molecular weight at such level may be considered to be satisfactory in physical properties as polymers to be used in bioabsorbable pharmaceutical compositions which are objective of said process, but they are dissatisfactory in physical properties as biodegradable plastics.

Japanese Published Examined Patent Application No. 52930/90 discloses a process for producing polylactide having a molecular weight of at least 4,000, usually 4,000-20,000 by subjecting lactic acid to polycondensation reaction in the absence of a catalyst at a temperature of 220-260°C and at a pressure of less than 10 mmHg.

Japanese Published Examined Patent Application No. 13963/93 discloses a process for producing polyglycolide or polylactide having a molecular weight of 8,000-11,000 by adding a phosphoric acid compound or a phosphorous acid compound when the molecular weight of lactic acid or glycolic acid subjected to polycondensation reaches 2,000-6,000 in the presence of a tin compound.

Japanese Published Unexamined Patent Application No. 65360/94 discloses a process for producing a polyhydroxycarboxylic acid having a weight-average molecular weight of more than 15,000, usually 5,000-200,000, by subjecting hydroxycarboxylic acids or oligomers thereof to dehydration condensation reaction in a reaction mixture containing an organic solvent substantially in the absence of water.

In this process, a catalyst is not necessarily used, but the use of a catalyst can accelerate the reaction. Metals belonging to II, III, IV, and V groups of the periodic table, and oxides or salts thereof are mentioned as catalysts, but there is no reference to aluminum silicate.

A need exists for an excellent process for the direct dehydration condensation of a hydroxycarboxylic acid.

### Disclosure of the Invention

The present invention provides a process for producing polyhydroxycarboxylic acids, specifically, polyhydroxycarboxylic acids having a weight-average molecular weight of 50,000 or above by subjecting hydroxycarboxylic acids or oligomers thereof to polycondensation in the presence of aluminum silicate containing 5-40 weight % (hereinafter "%" represents weight %) aluminum oxide. The polyhydroxycarboxylic acids include polymers of hydroxycarboxylic acids, and copolymers of hydroxycarboxylic acids.

The hydroxycarboxylic acids suitable for use in the present invention are aliphatic hydroxycarboxylic acids having 2-6 carbon atoms such as lactic acid, glycolic acid, hydroxybutyric acid, hydroxyvaleric acid, and hydroxycaproic acid, which may be in any of the D-, L-, and DL- forms. Usually, commercially available hydroxycarboxylic acids are used.

As the oligomers of hydroxycarboxylic acids, oligomers having molecular weight of 300-3,000 are used, which can be usually produced by subjecting hydroxycarboxylic acids to dehydration polycondensation.

The polymers of hydroxycarboxylic acids are prepared by using a single kind of hydroxycarboxylic acid. The copolymers of hydroxycarboxylic acids are prepared from a mixture of 2 or more hydroxycarboxylic acids, or a mixture of at least one kind of hydroxycarboxylic acid and at least one kind of cyclic compound derived from the hydroxycarboxylic acid, i.e. a mixture of at least one kind of the hydroxycarboxylic acid such as glycolic acid or lactic acid and at least one kind of the cyclic compound derived from the hydroxycarboxylic acid such as $\gamma$-butyrolactone or $\varepsilon$-caprolactone.

The hydroxycarboxylic acids may be used in the form of a solid, an aqueous solution, etc. Usually, commercially available 50-90% aqueous solutions are used, and it is preferable to concentrate them prior to reaction. The concentration is usually carried out at 100-150°C for 4-8 hours in the absence of a catalyst under atmospheric pressure in a stream of nitrogen.

As the aluminum silicate, those obtained according to known methods [e.g., the method described in "Shokubai Binran" (Catalyst Handbook) P.174-177 published on Feb. 25, 1967] or methods similar thereto may be used as well as commercially available ones. Aluminum silicate appropriate for use contains 5-40%, preferably 10-30% aluminum oxide.

Aluminum silicate which underwent drying, washing (with hydrochloric acid, etc.), etc. in advance may also be used.

Aluminum silicate is used in an amount of 0.03-10%, preferably 0.5-7%, more preferably 2-5% based on the amount of a hydroxycarboxylic acid, in one to several portions.

The aluminum oxide ($Al_2O_3$) content is determined according to the following equation.

$$Al_2O_3 \text{ content (\%)} = \frac{\text{Weight of } Al_2O_3}{\text{Weight of } SiO_2 + \text{Weight of } Al_2O_3} \times 100$$

Aluminum silicate can be added as it is or as a dispersion in a solvent such as toluene or xylene, at the start of reaction together with starting materials or in the course of reaction.

The polycondensation reaction is carried out at 160-250°C, preferably 180-240°C, more preferably 180-220°C, at 0.05-40 mmHg, preferably 0.1-25 mmHg, for 5-50 hours, preferably 10-30 hours.

The reaction product obtained in the molten state is cooled to room temperature to give solidified polyhydroxycarboxylic acid.

The weight-average molecular weight of the polyhydroxycarboxylic acid obtained by the process of the present invention is usually 50,000-300,000, though it varies with kind and amount of catalyst, reaction temperature, reaction pressure, reaction time, etc.

The polyhydroxycarboxylic acid obtained usually as a polyhydroxycarboxylic acid carrying aluminum silicate at a ratio of aluminum silicate to the polyhydroxycarboxylic acid being 0.03-10 weight % is biodegradable.

For the use in drug delivery systems, a polyhydroxycarboxylic acid carrying substantially no aluminum silicate is preferable. The polyhydroxycarboxylic acid carrying substantially no aluminum silicate (aluminum silicate content: less than 0.03%) is obtained by purifying a polyhydroxycarboxylic acid carrying aluminum silicate at a ratio of aluminum silicate to the polyhydroxycarboxylic acid being 0.03-10 weight %.

Purification can be carried out in the following manner.

A polyhydroxycarboxylic acid carrying aluminum silicate is dissolved in a chlorinated hydrocarbon such as chloroform, and insoluble aluminum silicate is removed by filtration. To the filtrate is added a lower alcohol, such as isopropanol, and the polyhydroxycarboxylic acid precipitated is separated.

For the use as biodegradable polymers, the polyhydroxycarboxylic acid carrying aluminum silicate or the polyhydroxycarboxylic acid obtained by adding aluminum silicate as a degradation promoter are preferable, though the polyhydroxycarboxylic acid carrying substantially no aluminum silicate can also be used as biodegradable polymers.

Best Mode for Carrying Out the Invention

Examples are shown below.

Example 1

A 90% aqueous solution of L-lactic acid (150 g) was put into a reaction vessel equipped with a stirrer and a nitrogen-introducing tube. After substitution of nitrogen gas was carried out three times, the solution was concentrated at 120°C for 5 hours with stirring in a stream of nitrogen. To the resulting concentrate was added 2.1 g of commercially available synthetic aluminum silicate containing 17% aluminum oxide. Then, the temperature was raised to 220°C, and the pressure was reduced gradually to 20 mmHg over 30 minutes. The mixture was stirred at 220 ± 5°C for 30 hours, and the reaction product obtained in the molten state was cooled to room temperature to give 69.2 g of lactic acid polymer as a light brown solid.

The physical properties of this lactic acid polymer are as follows.

| (1) Weight-average molecular weight[*1] | 98,000 |
|---|---|
| (2) Tensile strength[*2] | 280 kg/cm$^2$ |
| (3) Elongation percentage[*2] | 5% |

*1 The lactic acid polymer was dissolved in chloroform to obtain a 0.5% solution, and the weight-average molecular weight was measured by gel permeation chromatography (GPC) using standard polystyrene of known molecular weight. As GPC columns, TOSOH G-5000, TOSOH G-3000, and TOSOH G-1000 (TOSOH CORPOPATION) connected in series were used, and the measurement was carried out at a temperature of 40°C. (Hereinafter the measurement is carried out in the same manner.)
*2 The lactic acid polymer was dissolved in chloroform to produce a film having a thickness of 50-100 μ by the casting method. This film was used to prepare No. 2 test pieces in accordance with JISK7127, and the tensile strength and the elongation percentage were measured at a tensile speed of 1 mm/min. (Hereinafter the measurement is carried out in the same manner.)

The lactic acid polymer was placed in a platinum petri dish and was subjected to sodium carbonate melting treatment. The aluminum content and the silicon content of the polymer were determined to be 0.248% and 1.075%, respectively, by using an atomic absorption spectrometer (Z-8270, product of Hitachi, Ltd.).

From these values the aluminum silicate content was calculated to be 2.77%.

The lactic acid polymer passed "Heavy Metal Dissolution Test" which was carried out according to the general standard test on synthetic resin utensils, containers and packages (Food Hygiene Law, a book of the Six Major Laws, P. 822-853). The result of the potassium permanganate consumption test according to the same general standard test was less than 1 ppm.

No. 2 test pieces of the lactic acid polymer (thickness of the film: 100 μ) were buried in the ground, and taken out after 3 months for observation. The test pieces had no trace of the original form.

Example 2

A 90% aqueous solution of L-lactic acid (150 g) was put in a reaction vessel equipped with a stirrer and a nitrogen-introducing tube. After substitution of nitrogen gas was carried out three times, the solution was concentrated at 120°C for 5 hours with stirring in a stream of nitrogen. To the resulting concentrate was added 1.8 g of commercially available synthetic aluminum silicate containing 17% aluminum oxide which had been dried at 200°C for 8 hours. Then, the temperature was raised to 220°C, and the pressure was reduced gradually to 1 mmHg over 30 minutes. The mixture was stirred at 220 ± 5°C for 35 hours, and the reaction product obtained in the molten state was cooled to room temperature to give 62.2 g of lactic acid polymer as a light brown solid.

The physical properties of this lactic acid polymer are as follows.

| (1) Weight-average molecular weight | 102,000 |
|---|---|
| (2) Tensile strength | 295 kg/cm$^2$ |
| (3) Elongation percentage | 8% |

### Example 3

The same procedure as in Example 1 was repeated except that the amount of synthetic aluminum silicate was changed to 3.8 g, whereby 60.2 g of lactic acid polymer was obtained as a light brown solid.
The physical properties of this lactic acid polymer are as follows.

| (1) Weight-average molecular weight | 65,000 |
|---|---|
| (2) Tensile strength | 140 kg/cm$^2$ |
| (3) Elongation percentage | 4% |

### Example 4

A 90% aqueous solution of L-lactic acid (150 g) was put in a reaction vessel equipped with a stirrer and a nitrogen-introducing tube. After substitution of nitrogen gas was carried out three times, the solution was concentrated at 120°C for 5 hours with stirring in a stream of nitrogen. To the resulting concentrate was added 3.8 g of commercially available synthetic aluminum silicate containing 22% aluminum oxide which had been dried at 200°C for 8 hours. Then the temperature was raised to 220°C, and the pressure was reduced gradually to 1 mmHg over 30 minutes. The mixture was stirred at 220 ± 5°C for 30 hours, and the reaction product obtained in the molten state was cooled to room temperature to give 63.2 g of lactic acid polymer as a light brown solid.
The physical properties of this lactic acid polymer are as follows.

| (1) Weight-average molecular weight | 73,000 |
|---|---|
| (2) Tensile strength | 220 kg/cm$^2$ |
| (3) Elongation percentage | 3% |

### Example 5

The same procedure as in Example 1 was repeated except that 3.8 g of commercially available synthetic aluminum silicate containing 14% aluminum oxide was used as aluminum silicate, whereby 60.2 g of lactic acid polymer was obtained as a light brown solid.
The physical properties of this lactic acid polymer are as follows.

| (1) Weight-average molecular weight | 70,000 |
|---|---|
| (2) Tensile strength | 110 kg/cm$^2$ |
| (3) Elongation percentage | 3% |

### Example 6

A 90% aqueous solution of L-lactic acid (450 g) was put in a reaction vessel equipped with a stirrer and a nitrogen-introducing tube. After substitution of nitrogen gas was carried out three times, the solution was concentrated at 120°C for 5 hours with stirring in a stream of nitrogen to give 300 g of lactic acid oligomer. To 100 g of this lactic acid oligomer was added 2.1 g of commercially available synthetic aluminum silicate containing 17% aluminum oxide. Then the temperature was raised to 200°C, and the pressure was reduced gradually to 20 mmHg over 30 minutes. The mixture was stirred at 200 ± 5°C for 30 hours, and the reaction product obtained in the molten state was cooled to room temperature to give 59.2 g of lactic acid polymer as a light brown solid.

The physical properties of this lactic acid polymer are as follows.

| (1) Weight-average molecular weight | 70,000 |
|---|---|
| (2) Tensile strength | 110 kg/cm$^2$ |
| (3) Elongation percentage | 3% |

Example 7

To 100 g of the lactic acid oligomer obtained in Example 6 was added 2.1 g of commercially available synthetic aluminum silicate containing 22% aluminum oxide. Then the temperature was raised to 200°C, and the pressure was reduced gradually to 20 mmHg over 30 minutes. The mixture was stirred at 200 ± 5°C for 30 hours and the reaction product obtained in the molten state was cooled to room temperature to give 61.2 g of lactic acid polymer as a light brown solid.

The physical properties of this lactic acid polymer are as follows.

| (1) Weight-average molecular weight | 70,000 |
|---|---|
| (2) Tensile strength | 110 kg/cm$^2$ |
| (3) Elongation percentage | 3% |

Example 8

The lactic acid oligomer obtained in Example 6 (18.0 g) and 2.1 g of 100% glycolic acid were put in a reaction vessel equipped with a stirrer and a nitrogen-introducing tube. After substitution of nitrogen gas was carried out three times, the materials were molten by raising the temperature by 10°C per minute up to 120°C in a stream of nitrogen, followed by addition of 2.1 g of commercially available synthetic aluminum silicate containing 17% aluminum oxide. Then the temperature was raised to 200°C, and the pressure was reduced gradually to 20 mmHg over 30 minutes, followed by stirring at 210 ± 10°C for 3 hours. After the pressure was reduced gradually to 1 mmHg over 30 minutes, the mixture was stirred at 210 ± 10°C for 19 hours to give copolymer in the molten state. The product was cooled to room temperature to give 9.8 g of lactic acid-glycolic acid copolymer as a dark brown solid.

The weight-average molecular weight of this copolymer was 65,000.

The copolymer was dissolved in heavy dimethylformamide [DCON(CD$_3$)$_2$] and the composition molar ratio thereof was measured with NMR, GSX-400 (product of JOEL Ltd.) using a 5 mm-measurement tube.

The molar ratio of the copolymer composition of lactic acid and glycolic acid was 8.5 : 1.

Example 9

A 90% aqueous solution of L-lactic acid (32.4 g) and 3.75 g of $\gamma$-butyrolactone were put in a reaction vessel equipped with a stirrer and a nitrogen-introducing tube. After substitution of nitrogen gas was carried out three times, the temperature was raised by 10°C per minute to 120°C in a stream of nitrogen, and the mixture was concentrated at 120°C for 5 hours with stirring. To the resulting concentrate was added 2.2 g of commercially available synthetic aluminum silicate containing 17% aluminum oxide. Then the temperature was raised to 200°C and the pressure was reduced gradually to 20 mmHg over 30 minutes, followed by stirring at 220 ± 15°C for 3 hours. After the pressure was reduced gradually to 1 mmHg over 30 minutes, the mixture was stirred at 210 ± 10°C for 18 hours to give copolymer in the molten state. The product was cooled to room temperature to give 21.2 g of lactic acid-hydroxybutyric acid copolymer as a dark brown solid. The weight-average molecular weight of this copolymer was 65,000.

Example 10

The light brown lactic acid polymer obtained in Example 1 (10 g) was dissolved in 140 g of chloroform and the solution was filtered. The obtained filtrate was added to 500 ml of isopropanol for precipitation to give 6.5 g of white lactic acid polymer.

The physical properties of this lactic acid polymer are as follows.

| (1) Weight-average molecular weight | 105,000 |
|---|---|
| (2) Tensile strength | 350 kg/cm$^2$ |
| (3) Elongation percentage | 10% |

Determination of the aluminum content and the silicon content of the obtained lactic acid polymer was carried out in the same manner as in Example 1 with an atomic absorption spectrometer, but neither aluminum nor silicon was detected. This shows that the aluminum silicate content of the lactic acid polymer was be less than 0.03%.

The heavy metal dissolution test was carried out on the obtained lactic acid polymer in the same manner as in Example 1, and the result was successful. The potassium permanganate consumption test was also carried out, and the result thereof was less than 1 ppm.

No. 2 test pieces of the lactic acid polymer (thickness of the film: 100 μ) were buried in the ground and taken out after 3 months for observation. The test pieces retained their original form, but the tensile strength was reduced to less than 100 kg/cm$^2$.

Industrial Applicability

The present invention provides polyhydroxycarboxylic acids having a weight-average molecular weights of 50,000 or above which are usuful as biodegradable plastics for food-wrapping films, beverage bottles, drug delivery systems, etc.

**Claims**

1. A process for producing a polyhydroxycarboxylic acid, characterized in that a hydroxycarboxylic acid or an oligomer thereof is subjected to polycondensation in the presence of aluminum silicate containing 5-40 weight % aluminum oxide.

2. A process according to Claim 1, wherein the polyhydroxycarboxylic acid has a weight-average molecular weight of 50,000 or above.

3. A process according to Claim 1, wherein the polyhydroxycarboxylic acid is a polyhydroxycarboxylic acid having a weight-average molecular weight of 50,000 or above and carrying aluminum silicate at a ratio of aluminum silicate to the polyhydroxycarboxylic acid being 0.03-10 weight %.

4. A polyhydroxycarboxylic acid having a weight-average molecular weight of 50,000 or above and carrying aluminum silicate at a ratio of aluminum silicate to the polyhydroxycarboxylic acid being 0.03-10 weight %.

| INTERNATIONAL SEARCH REPORT | International application No. |
| --- | --- |
| | PCT/JP95/00721 |

### A. CLASSIFICATION OF SUBJECT MATTER

Int. Cl$^6$   C08G63/06, 63/84, 63/87, C08L67/04, C08K3/34

According to International Patent Classification (IPC) or to both national classification and IPC

### B. FIELDS SEARCHED

Minimum documentation searched (classification system followed by classification symbols)

Int. Cl$^6$   C08G63/00-63/91, C08L67/00-67/08, C08K3/00-3/40

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP, 61-111326, A (Wako Pure Chemical Industries, Ltd.), May 29, 1986 (29. 05. 86), Claim, line 3, upper left column, page 3 (Family: none) | 1 - 4 |
| X | JP, 61-28521, A (Wako Pure Chemical Industries, Ltd.), February 8, 1986 (08. 02. 86), Claim, line 19, upper right column, page 2 & US, 4677191, A & US, 4683288, A | 1 - 4 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| May 23, 1995 (23. 05. 95) | June 13, 1995 (13. 06. 95) |

| Name and mailing address of the ISA/ | Authorized officer |
| --- | --- |
| Japanese Patent Office | |
| Facsimile No. | Telephone No. |

Form PCT/ISA/210 (second sheet) (July 1992)